# EUROPÄISCHE PATENTSCHRIFT

(11) **EP 3 541 704 B1**
(45) Veröffentlichungstag und Bekanntmachung des Hinweises auf die Patenterteilung: **11.11.2020**
(21) Anmeldenummer: 17772700.5
(22) Anmeldetag: 26.09.2017
(51) Int. Cl.: B64F 1/32, B60K 1/04, B60K 7/00

(54) **VERKEHRSSCHNITTSTELLENTRANSPORTVORRICHTUNG**
INTERCHANGE HUB TRANSPORT DEVICE
DISPOSITIF DE TRANSPORT D'INTERFACE DE CIRCULATION

(30) Priorität: 16.11.2016 DE 102016222511
(43) Veröffentlichungstag der Anmeldung: 25.09.2019
(73) Patentinhaber: Robert Bosch GmbH, 70442 Stuttgart (DE)
(72) Erfinder: RUPRECHT, Ester, 77654 Offenburg (DE)
(86) Internationale Anmeldenummer: PCT/EP2017/074348
(87) Internationale Veröffentlichungsnummer: WO 2018/091180

(56) Entgegenhaltungen:
- WO-A1-2016/128488
- DE-A1- 10 254 101
- JP-A- H06 168 365
- JP-A- S61 295 150
- JP-A- 2000 211 519
- JP-A- 2001 338 397
- JP-A- 2006 273 538
- US-A1- 2011 259 658
- US-A1- 2016 082 772

## Beschreibung

### Stand der Technik

Es ist bereits eine Verkehrsschnittstellentransportvorrichtung, insbesondere eine Flughafentransportvorrichtung, mit einer Transporteinheit, die zu einem Transport zumindest einer Person und/oder zumindest eines Gepäckstücks innerhalb zumindest eines Verkehrsschnittstellenbereichs vorgesehen ist, vorgeschlagen worden.

Das Dokument US 2016/0082772 beschreibt ein Verkehrschnittstellentransportvorrichtung und ein Verfahren gemäß der Präambel von Ansprüche 1 und 6.

### Offenbarung der Erfindung

Die Erfindung geht aus von einer Verkehrsschnittstellentransportvorrichtung, insbesondere von einer Flughafentransportvorrichtung, mit einer Transporteinheit, die zu einem Transport zumindest einer Person und/oder zumindest eines Gepäckstücks innerhalb zumindest eines Verkehrsschnittstellenbereichs vorgesehen ist.

Es wird gemäß Erfindung eine Verkehrsschnittstellentransportvorrichtung gemäß Anspruch 1 vorgeschlagen. Dadurch kann ein Komfort und eine Sicherheit an Verkehrsschnittstellen vorteilhaft erhöht werden. Warteschlangen können vorteilhaft verkürzt oder vermieden werden. Eine Sicherheit kann dadurch erhöht werden. Bestehende Transporteinheiten können auf einfache Weise mit der zumindest einen Radeinheit nachgerüstet werden. Die Verkehrsschnittstelle bildet vorzugsweise eine Schnittstelle zwischen zumindest zwei verschiedenen Transportmitteln und/oder Verkehrsarten aus. Die Verkehrsschnittstellentransportvorrichtung bildet vorzugsweise eine Transportvorrichtung für eine Verkehrsschnittstelle aus. Die Verkehrsschnittstelle bildet insbesondere einen Flughafen, einen Hafen, ein Containerterminal, eine Park-and-ride- bzw. eine Park-and-rail-Anlage, eine Autoverladerampe, einen Bahnhof oder eine Haltestelle aus. Unter einem "Verkehrsschnittstellenbereich" soll in diesem Zusammenhang insbesondere ein Bereich verstanden werden, der innerhalb der Verkehrsschnittstelle angeordnet ist und/oder der in einer unmittelbaren Umgebung der Verkehrsschnittstelle angeordnet ist. Vorzugsweise bildet der Verkehrsschnittstellenbereich einen Flughafenparkplatz, ein Flughafenterminal, eine Flughafenkontrollstelle und/oder einen Flughafensicherheitsbereich aus. Unter der Wendung "am Radgrundkörper" soll in diesem Zusammenhang insbesondere in unmittelbarer Nähe des Radgrundkörpers, bevorzugt weniger als 50 cm vom Radgrundkörper beabstandet und besonders bevorzugt innerhalb des Radgrundkörpers verstanden werden.

Unter einem "Smartwheel" soll insbesondere ein Rad mit elektrischen Antriebskomponenten, vorzugsweise ausgebildet nach Art eines Powerwheels, und vorzugsweise mit Sensorkomponenten und mit Datenschnittstellenkomponenten, welche zu einer Implementierung zumindest einer Systemfunktionalität beitragen, verstanden werden. Vorzugsweise weist die zumindest eine Antriebseinheit ein Getriebe und einen Elektromotor auf. Vorzugsweise bildet der Radgrundkörper eine Felge aus, auf welche ein Reifen aufziehbar ist. Unter einer "Transporteinheit" soll in diesem Zusammenhang insbesondere ein Wagen, bevorzugt ein Gepäckwagen, besonders bevorzugt ein Gepäckwagen mit zumindest einer Sitzeinheit, verstanden werden. Unter einem "Gepäckstück" soll in diesem Zusammenhang insbesondere ein Koffer, eine Reisetasche, ein Rucksack und/oder ein Handgepäckstück verstanden werden.

Die Energiespeichereinheit weist vorteilhaft zumindest einen Akkumulator, besonders vorteilhaft zumindest einen, vorzugsweise wenigstens 100-mal, wiederaufladbaren Akkumulator auf. Besonders vorteilhaft ist die Energiespeichereinheit als ein Akkupack ausgebildet. Es ist auch denkbar, dass die Energiespeichereinheit zumindest einen Superkondensator und/oder zumindest einen Kondensator umfasst. Es ist denkbar, dass die Energiespeichereinheit drahtlos aufladbar ausgebildet ist. Vorzugsweise weist die Energiespeichereinheit zumindest eine Speicherelektronik auf. Vorteilhaft ist die Speicherelektronik als eine Batteriemanagement-Elektronik ausgebildet. Besonders bevorzugt ist die Speicherelektronik dazu vorgesehen, einen Ladevorgang der Energiespeichereinheit zu erkennen und/oder zu überwachen. Alternativ oder zusätzlich ist die Speicherelektronik dazu vorgesehen, Leistungsdaten der Energiespeichereinheit zu erfassen und/oder zu überwachen. Alternativ oder zusätzlich ist die Speicherelektronik dazu vorgesehen, mit einer Elektronikeinheit und/oder einem Ladegerät über zumindest eine Kommunikationsschnittstelle zu kommunizieren. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Die zumindest eine Energiespeichereinheit ist vorzugsweise zu einer Versorgung einer Antriebseinheit der elektromotorisch angetriebenen Radvorrichtung mit elektrischer Energie bei einem Betrieb und/oder zu einem Aufladen einer Akkueinheit der elektromotorisch angetriebenen Radvorrichtung mit elektrischer Energie vorgesehen.

Gemäß Erfindung wird vorgeschlagen, dass die zumindest eine Transporteinheit zumindest eine Benutzerschnittstelle umfasst, die zu einer Steuerung der zumindest einen Radeinheit durch einen Benutzer vorgesehen ist. Dadurch kann eine besonders komfortable Bedienung der Verkehrsschnittstellentransportvorrichtung durch einen Benutzer erzielt werden. Vorzugsweise ist die Benutzerschnittstelle dazu vorgesehen, eine Leistung, eine Geschwindigkeit, ein Drehmoment und/oder eine Lenkrichtung der zumindest einen Radeinheit durch einen Benutzer einzustellen. Die Benutzerschnittstelle umfasst vorzugsweise eine Ausgabeeinheit, wie insbesondere einen Bildschirm, und eine Eingabeeinheit, wie insbesondere zumindest eine Taste oder eine berührungsempfindliche Fläche. Besonders vorteilhaft bildet die Benutzerschnittstelle ein Touchscreen aus.

Des Weiteren wird vorgeschlagen, dass die zumindest eine Transporteinheit zumindest ein Gepäckfach und zumindest einen Gepäckfachsensor umfasst, wobei der zumindest eine Gepäckfachsensor dazu vorgesehen ist, einen Schließzustand des Gepäckfachs an die zumindest eine Radeinheit zu übermitteln. Dadurch kann ein Öffnen des zumindest einen Gepäckstücks vorteilhaft erfasst werden. Weiterhin kann auf besonders einfache Weise eine Zugriffskontrolle erzielt werden. Bevorzugt umfasst die Transporteinheit zumindest ein Schließmittel, das zu einem Abschließen des zumindest einen Gepäckfachs vorgesehen ist. Vorzugsweise ist das zumindest eine Schließmittel elektrisch durch ein Signal der zumindest einen Radeinheit ver- und/oder entriegelbar. Weiterhin vorteilhaft kann ein Gepäckstück auf einfache Weise einem Benutzer zugeordnet werden. Weiterhin vorteilhaft ist das Gepäckfach dazu vorgesehen, eine Explosion- und/oder eine Endzündung eines aufbewahrten Gepäckstücks zumindest teilweise abzuschirmen, insbesondere zum Schutz von Personen.

Ferner wird vorgeschlagen, dass die zumindest eine Transporteinheit zumindest ein Gepäckfach und zumindest einen Gepäckfachsensor umfasst, wobei der zumindest eine Gepäckfachsensor dazu vorgesehen ist, eine Anzahl und/oder ein Gewicht von geladener Gepäckstücke an die zumindest eine Radeinheit zu übermitteln. Dadurch können die Gepäckstücke vorteilhaft direkt zu einer freien und/oder zuständigen Gepäckkontrolle transportiert werden. Weiterhin vorteilhaft können erfasste Gepäckdaten von der Radeinheit an eine externe Servereinheit übermittelt werden.

Zudem wird vorgeschlagen, dass die zumindest eine Transporteinheit einen Personenanzahlsensor umfasst, der dazu vorgesehen ist, eine Anzahl an transportierten Personen an die zumindest eine Radeinheit zu übermitteln. Dadurch können Personen vorteilhaft direkt zu einer freien und/oder zuständigen Personenkontrolle transportiert werden. Weiterhin vorteilhaft können erfasste Personendaten von der Radeinheit an eine externe Servereinheit übermittelt werden.

Weiterhin wird gemäß Erfindung vorgeschlagen, dass die zumindest eine Radeinheit zumindest eine Kommunikationseinheit umfasst, die dazu vorgesehen ist, mit einer externen Servereinheit und/oder einem externen Nutzerendgerät zu kommunizieren. Dadurch kann ein Eincheckvorgang vorteilhaft bereits vor oder während eines Transportvorgangs erfolgen. Eine Eincheckzeit kann somit vorteilhaft reduziert werden. Vorzugsweise ist die Kommunikationseinheit dazu vorgesehen, mit der externen Servereinheit und/oder mit dem externen Nutzerendgerät drahtlos zu kommunizieren. Das externe Nutzerendgerät bildet vorzugsweise ein Mobiltelefon, insbesondere ein Smartphone aus.

Ferner wird vorgeschlagen, dass die zumindest eine Radeinheit dazu vorgesehen ist, die Transporteinheit in zumindest einem Sicherheitsbereich zumindest teilweise automatisch zu bewegen. Dadurch kann beispielsweise Gepäck während einer Personenkontrolle bereits zu einer Gepäckkontrolle transportiert werden, wodurch vorteilhaft Zeit eingespart werden kann.

Zusätzlich ist es denkbar, dass die elektromotorisch angetriebene Radeinheit zumindest eine Umgebungssensoreinheit aufweist, die dazu vorgesehen ist, zumindest eine Umgebung der elektromotorisch angetriebenen Radeinheit zu erfassen. Bevorzugt ist die Umgebungssensoreinheit als eine Kamera, eine Ultraschallsensoreinheit, eine Radarsensoreinheit, eine Infrarotsensoreinheit oder als eine weitere, einem Fachmann als sinnvoll erscheinende Umgebungssensoreinheit ausgebildet. Besonders bevorzugt ist in Abhängigkeit von der Umgebung, die von der Umgebungssensoreinheit erfasst wird, zumindest eine Sicherheitsfunktion der Radeinheit ausführbar. Unter einer "Sicherheitsfunktion" soll insbesondere eine Funktion der elektromotorisch angetriebenen Radeinheit verstanden werden, die dazu vorgesehen ist, in einer Gefährdungslage, insbesondere für die elektromotorisch angetriebene Radeinheit und/oder einen Nutzer, zu einer Reduzierung oder Vermeidung eines Schadens, insbesondere der elektromotorisch angetriebenen Radeinheit und/oder des Nutzers, ausgeführt zu werden. Es ist denkbar, dass die Sicherheitsfunktion Funktionsschritte zu einem Abbremsen einer Bewegung, einem Abschalten einer Antriebseinheit, einem Blockieren einer Antriebseinheit, einer Ausgabe eines optischen, akustischen und/oder haptischen Alarmsignals, einer Steuerung einer Bewegung zu einer Kollisionsvermeidung und/oder weitere, einem Fachmann als sinnvoll erscheinende Funktionsschritte umfasst. Es ist denkbar, dass die Umgebungssensoreinheit einen räumlichen Abstand eines Nutzers und/oder einer externen Einheit von der elektromotorisch angetriebenen Radeinheit erfasst und in Abhängigkeit von dem räumlichen Abstand eine Sicherheitsfunktion, insbesondere umfassend einen Funktionsschritt zu einem Abbremsen einer Bewegung der elektromotorisch angetriebenen Radeinheit oder einem Blockieren der Antriebseinheit der elektromotorisch angetriebenen Radeinheit, ausführt. Es ist denkbar, dass die Umgebungssensoreinheit dazu vorgesehen ist, den räumlichen Abstand mittels einer empfangenen Signalstärke eines Signals, insbesondere eines Bluetooth-, Infrarot-, RFID- oder NFC-Signals, einer externen Einheit zu bestimmen. Weiterhin ist es denkbar, dass die elektromotorisch angetriebene Radeinheit eine Autorisierungseinheit aufweist, die dazu vorgesehen ist, eine Benutzung der elektromotorisch angetriebenen Radeinheit, insbesondere der Antriebseinheit, in Abhängigkeit von einer Autorisierungskennung eines Nutzers freizugeben oder zu sperren. Es ist denkbar, dass die Autorisierungskennung als ein PIN-Code, ein RFID-Tag, ein Passwort, ein Fingerabdruck, eine Stimme, ein Gesichtsmerkmal, ein biometrisches Merkmal oder eine weitere, einem Fachmann als sinnvoll erscheinende Autorisierungskennung ausgebildet ist. Bevorzugt ist die Autorisierungskennung mittels einer externen Einheit, insbesondere einem Smartphone, erfassbar und an die elektromotorisch angetriebene Radeinheit, insbesondere die Kommunikationseinheit und/oder die Autorisierungseinheit, insbesondere mittels einer drahtlosen elektronischen Kommunikation, übermittelbar.

Des Weiteren wird gemäß Erfindung ein Verfahren zum Transport von Personen und/oder Gepäckstücken mittels einer Transporteinheit gemäß Anspruch 6 vorgeschlagen. Dadurch kann ein Einchecken und/oder ein Registriervorgang von Personen und/oder Gepäckstücken bereits vor und/oder während des Transports erfolgen. Dadurch können Warteschlangen vorteilhaft vermieden oder reduziert werden. Ferner kann ein Reisekomfort vorteilhaft erhöht werden.

Weiterhin wird vorgeschlagen, dass zumindest ein Gepäckstück in einem Gepäckfach verstaut wird, wobei dem Gepäckstück zugeordnete Personendaten an die Radeinheit übermittelt werden. Dadurch kann das zumindest eine Gepäckstück vorteilhaft unabhängig von der zugeordneten Person eingecheckt werden.

Zudem wird vorgeschlagen, dass die Transporteinheit von der zumindest einen Radeinheit zumindest teilautomatisch in zumindest einem Sicherheitsbereich bewegt wird. Dadurch kann eine Gepäckkontrolle vorteilhaft effizient und zeitsparend durchgeführt werden.

Die erfindungsgemäße Verkehrsschnittstellentransportvorrichtung soll hierbei nicht auf die oben beschriebene Anwendung und Ausführungsform beschränkt sein. Insbesondere kann die erfindungsgemäße Verkehrsschnittstellentransportvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Verkehrsschnittstellentransportvorrichtung in einer schematischen Darstellung,
- Fig. 2: die Verkehrsschnittstellentransportvorrichtung nach Figur 1 in einer weiteren schematischen Darstellung und
- Fig. 3: ein Ablaufdiagramm eines Verfahrens zum Transport von Personen und/oder Gepäckstücken mittels einer Transporteinheit in einem Verkehrsschnittstellenbereich.

### Beschreibung des Ausführungsbeispiels

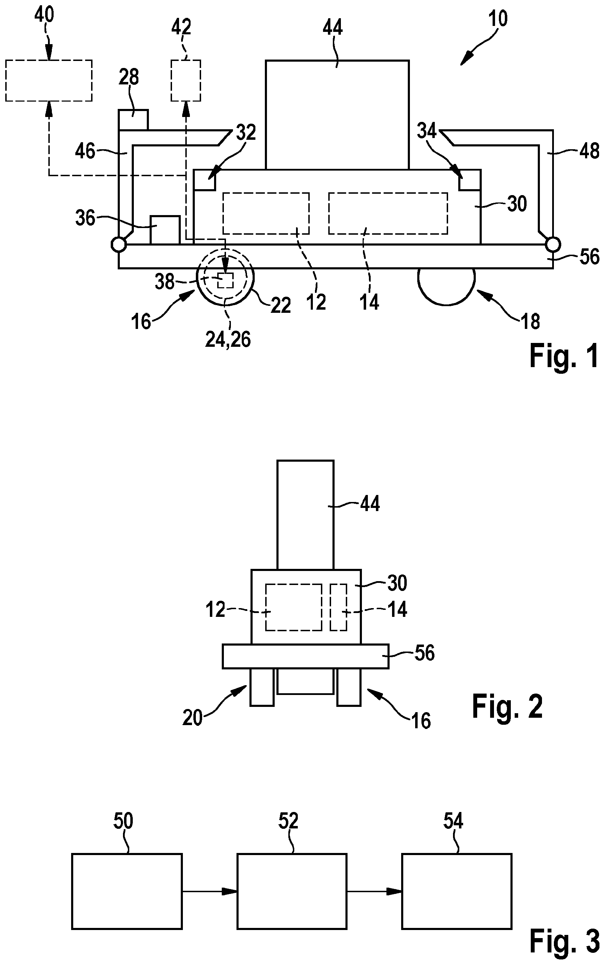

In den Figuren 1 und 2 ist schematisch eine Verkehrsschnittstellentransportvorrichtung gezeigt. Die Verkehrsschnittstellentransportvorrichtung bildet eine Flughafentransportvorrichtung aus. Die Verkehrsschnittstellentransportvorrichtung weist eine Transporteinheit 10 auf. Die Transporteinheit 10 ist zu einem Transport von zumindest einer Person innerhalb eines Verkehrsschnittstellenbereichs vorgesehen. Die Transporteinheit 10 ist zu einem Transport von Gepäckstücken 12, 14 innerhalb des Verkehrsschnittstellenbereichs vorgesehen ist. Die Transporteinheit 10 bildet einen Gepäckwagen mit einer Sitzeinheit aus. Die Transporteinheit 10 umfasst zwei Sicherungsbügel 46, 48. Die Sicherungsbügel 46, 48 sind an sich gegenüberliegenden Längsenden der Transporteinheit 10 angeordnet. Die Sicherungsbügel 46, 48 sind an einer Fußstütze 56 der Transporteinheit 10 schwenkbar angeordnet. In der Figur 2 sind die Sicherungsbügel 46, 48 aus Gründen der Übersichtlichkeit nicht dargestellt.

Die Verkehrsschnittstellentransportvorrichtung umfasst vier elektromotorisch angetriebene Radeinheiten 16, 18, 20. Von den vier elektromotorisch angetriebenen Radeinheiten 16, 18, 20 sind in den Figuren lediglich drei Radeinheiten 16, 18, 20 sichtbar. Die Radeinheiten 16, 18, 20 bilden jeweils ein Smartwheel aus. Die Radeinheiten 16, 18, 20 sind zu einem Antrieb der Transporteinheit 10 vorgesehen. Die Radeinheiten 16, 18, 20 sind identisch ausgebildet, weshalb im Folgenden lediglich auf eine Radeinheit 16 der Radeinheiten 16, 18, 20 Bezug genommen wird.

Die Radeinheit 16 umfasst einen um eine Rotationsachse drehbaren Radgrundkörper 22. Die Radeinheit 16 umfasst eine innerhalb des Radgrundkörpers 22 angeordnete Antriebseinheit 24. Die Radeinheit 16 umfasst eine am Radgrundkörper 22 angeordnete Energiespeichereinheit 26. Die Energiespeichereinheit 26 ist innerhalb des Radgrundkörpers 22 angeordnet. Die Energiespeichereinheit 26 ist zu einer Energieversorgung der Antriebseinheit 24 vorgesehen. Die Energiespeichereinheit 26 weist einen Akkumulator auf.

Die Transporteinheit 10 umfasst eine Benutzerschnittstelle 28. Die Benutzerschnittstelle 28 ist zu einer Steuerung der Radeinheiten 16, 18, 20 durch einen Benutzer vorgesehen. Über die Benutzerschnittstelle 28 ist eine Geschwindigkeit und eine Lenkrichtung der Radeinheiten 16, 18, 20 einstellbar. Die Benutzerschnittstelle 28 bildet einen berührungsempfindlichen Bildschirm aus. Die Radeinheit 16 ist dazu vorgesehen, die Transporteinheit 10 in einem Sicherheitsbereich automatisch zu bewegen.

Die Transporteinheit 10 umfasst zwei Gepäckfächer 30, 44. Die Gepäckfächer 30, 44 sind übereinander angeordnet. Die Gepäckfächer 30, 44 bilden eine Sitzgelegenheit aus. Die Gepäckfächer 30, 44 weisen eine gleiche Funktionsweise auf, weshalb im Folgenden lediglich auf ein Gepäckfach 30 der zwei Gepäckfächer 30, 44 eingegangen wird.

Die Transporteinheit 10 umfasst ein nicht näher dargestelltes Schließmittel, das zu einem Abschließen des Gepäckfachs 30 vorgesehen ist. Das Schließmittel ist elektrisch durch ein Signal der Radeinheit 16 verriegelbar. Das Schließmittel ist elektrisch durch ein Signal der Radeinheit 16 entriegelbar.

Die Transporteinheit 10 umfasst einen Gepäckfachsensor 32. Der Gepäckfachsensor 32 ist dazu vorgesehen, einen Schließzustand des Gepäckfachs 30 an die Radeinheit 16 zu übermitteln. Der Gepäckfachsensor 32 ist dazu vorgesehen, den Schließzustand des Gepäckfachs 30 an die Radeinheit 16 drahtlos zu übermitteln.

Die Transporteinheit 10 umfasst einen weiteren Gepäckfachsensor 34, wobei der weitere Gepäckfachsensor 34 dazu vorgesehen ist, eine Anzahl und/oder ein Gewicht von geladenen Gepäckstücken 12, 14 an die Radeinheit 16 zu übermitteln. Die Transporteinheit 10 umfasst einen Personenanzahlsensor 36. Der Personenanzahlsensor 36 ist dazu vorgesehen, eine Anzahl an transportierten Personen an die Radeinheit 16 zu übermitteln. Die Gepäckdaten und die Personendaten sind von der Radeinheit 16 drahtlos an eine externe Servereinheit 40 übermittelbar. Die Servereinheit 40 ist Teil des Flughafens und mit einem Fluginformationssystem verbunden.

Die Radeinheit 16 umfasst eine Kommunikationseinheit 38, die dazu vorgesehen ist, mit der externen Servereinheit 40 drahtlos zu kommunizieren. Die Kommunikationseinheit 38 ist weiter dazu vorgesehen, mit einem externen Nutzerendgerät 42, insbesondere einem Smartphone, zu kommunizieren. Hierbei können beispielsweise Daten eines gebuchten Tickets übertragen werden. Die Kommunikationseinheit 38 ist zu einer verschlüsselten Kommunikation mit der externen Servereinheit 40 und/oder dem externen Nutzerendgerät 42 vorgesehen.

Somit besitzt die Radeinheit 16 eine sichere Kommunikationsschnittstelle, die den Austausch von Daten und Informationen mit einem sicheren drahtlosen Datennetz des Flughafens erlaubt. Außerdem ermöglicht die Radeinheit 16 das Erfassen von Daten, die ein Nutzer eingibt.

In der Figur 3 ist ein möglicher Ablauf eines Verfahrens zum Transport von Personen und/oder Gepäckstücken 12, 14 mittels der Transporteinheit 10 in einem Verkehrsschnittstellenbereich, insbesondere in einem Flughafen, gezeigt.

In einem ersten Verfahrensschritt 50 ist die Transporteinheit 10 in einem Ankunftsbereich des Flughafens angeordnet, wie insbesondere auf einem Flughafenparkplatz, an einem Bahnhof oder an einem Taxistand. Die Gepäckfächer 30, 44 sind geöffnet. Ein Nutzer, beispielsweise ein Flugreisender, lädt im ersten Verfahrensschritt 50 zwei Gepäckstücke 12, 14 in das Gepäckfach 30 und schließt das Gepäckfach 30. Über die Benutzerschnittstelle 28 gibt der Nutzer seine Nutzerdaten, wie insbesondere seine Reisedaten ein. Die Daten werden an die Radeinheit 16 übermittelt und an die externe Servereinheit 40 geschickt. Das Gepäckfach 30 wird von einem Schließmittel elektrisch durch ein Signal der Radeinheit 16 verriegelt. Die im Gepäckfach 30 enthaltenen Gepäckstücke 12, 14 werden von den Gepäckfachsensoren 32, 34 erfasst. Ein Gewicht und eine Anzahl an Gepäckstücken 12, 14 werden an die Radeinheit 16 übermittelt und den Nutzerdaten zugeordnet. Den Gepäckstücken 12, 14 zugeordnete Personendaten werden an die Radeinheit 16 übermittelt. Somit werden sowohl Personendaten als auch Gepäckdaten der mit der Transporteinheit 10 zu transportierenden Personen und Gepäckstücke 12, 14 an die Radeinheit 16 elektronisch übermittelt. Die Radeinheit 16 überträgt die Gepäckdaten und die Nutzerdaten an die externe Servereinheit 40.

Die Gepäckstücke 12, 14 werden im Gepäckfach 30 verstaut. Es ist in diesem Zusammenhang jedoch auch denkbar, dass die Gepäckstücke 12, 14 oder weitere Gepäckstücke im weiteren Gepäckfach 44 verstaut werden. Der Nutzer kann sich auf das Gepäckfach 30 setzen. In einem zweiten Verfahrensschritt 52 bewegt die Radeinheit 16 die Transporteinheit 10 vom Ankunftsbereich zu einer Personenkontrollstelle. Die Radeinheit 16 ist zu einer Erfassung einer Stellung der Sicherungsbügel 46, 48 vorgesehen. Ein nutzergesteuertes Fahren wird erst bei geschlossenen Sicherungsbügeln 46, 48 freigegeben. Die Steuerung der Radeinheit 16 kann sowohl nutzergesteuert oder automatisiert erfolgen. Bei einem Erreichen der Personenkontrollstelle verlässt der Nutzer die Transporteinheit 10 und bewegt sich fußläufig durch eine Personenkontrolle.

In einem dritten Verfahrensschritt 54 wird die Transporteinheit 10 von der Radeinheit 16 automatisch in einen Sicherheitsbereich bewegt. Dabei durchläuft die Transporteinheit 10 eine Gepäckkontrollstelle. Hierbei können nach Bedarf die Gepäckfächer 30, 44 elektrisch über die Radeinheit 16 entriegelt werden. Anschließend wird die Transporteinheit 10 von der Radeinheit 16 automatisch in einen Verladebereich bewegt, wo die Gepäckstücke 12, 14 in ein Flugzeug verladen werden.

## Patentansprüche

1. Verkehrsschnittstellentransportvorrichtung, insbesondere Flughafentransportvorrichtung, mit einer Transporteinheit (10), die zu einem Transport zumindest einer Person und/oder zumindest eines Gepäckstücks (12, 14) innerhalb zumindest eines Verkehrsschnittstellenbereichs vorgesehen ist, **wobei** zumindest eine elektromotorisch angetriebene Radeinheit (16, 18, 20), insbesondere ein Smartwheel, die zu einem Antrieb der Transporteinheit (10) vorgesehen ist, wobei die zumindest eine Radeinheit (16, 18, 20) zumindest einen um eine Rotationsachse drehbaren Radgrundkörper (22), zumindest eine zumindest teilweise innerhalb des Radgrundkörpers (22) angeordnete Antriebseinheit (24) und zumindest eine am Radgrundkörpers (22) angeordnete Energiespeichereinheit (26) umfasst, wobei die Energiespeichereinheit (26) zu einer Energieversorgung der Antriebseinheit (24) vorgesehen ist, **wobei** die zumindest eine Transporteinheit (10) zumindest eine Benutzerschnittstelle (28) umfasst, die zu einer Steuerung der zumindest einen Radeinheit (16, 18, 20) durch einen Benutzer vorgesehen ist, **dadurch gekennzeichnet, dass** die zumindest eine Radeinheit (16, 18, 20) zumindest eine Kommunikationseinheit (38) umfasst, die dazu vorgesehen ist, mit einer externen Servereinheit (40) und/oder einem externen Nutzerendgerät (42) zu kommunizieren, wobei Daten an die Radeinheit (16) übermittelbar sind und an die externe Servereinheit (40) schickbar sind, wobei ein Gepäckfach (30) für die Gepäckstücke (12, 14) von einem Schließmittel elektrisch durch ein-Signal der Radeinheit (16) verriegelbar ist.

2. Verkehrsschnittstellentransportvorrichtung nach Anspruch 1, **dadurch gekennzeichnet, dass** die zumindest eine Transporteinheit (10) zumindest ein Gepäckfach (30) und zumindest einen Gepäckfachsensor (32) umfasst, wobei der zumindest eine Gepäckfachsensor (32) dazu vorgesehen ist, einen Schließzustand des zumindest einen Gepäckfachs (30) an die zumindest eine Radeinheit (16, 18, 20) zu übermitteln.

3. Verkehrsschnittstellentransportvorrichtung nach einem der vorhergehenden Ansprüche, **dadurch gekennzeichnet, dass** die zumindest eine Transporteinheit (10) zumindest ein Gepäckfach (30) und zumindest einen Gepäckfachsensor (34) umfasst, wobei der zumindest eine Gepäckfachsensor (34) dazu vorgesehen ist, eine Anzahl und/oder ein Gewicht von geladener Gepäckstücke (12, 14) an die zumindest eine Radeinheit (16, 18, 20) zu übermitteln.

4. Verkehrsschnittstellentransportvorrichtung nach einem der vorhergehenden Ansprüche, **dadurch gekennzeichnet, dass** die zumindest eine Transporteinheit (10) einen Personenanzahlsensor (36) umfasst, der dazu vorgesehen ist, eine Anzahl an transportierten Personen an die zumindest eine Radeinheit (16, 18, 20) zu übermitteln.

5. Verkehrsschnittstellentransportvorrichtung nach einem der vorhergehenden Ansprüche, **dadurch gekennzeichnet, dass** die zumindest eine Radeinheit (16, 18, 20) dazu vorgesehen ist, die Transporteinheit (10) in zumindest einem Sicherheitsbereich zumindest teilweise automatisch zu bewegen.

6. Verfahren zum Transport von Personen und/oder Gepäckstücken (12, 14) mittels einer Transporteinheit (10) in einem Verkehrsschnittstellenbereich, insbesondere in einem Flughafen, **wobei** Personendaten und/oder Gepäckdaten der mit der Transporteinheit (10) zu transportierenden Personen und/oder Gepäckstücke (12, 14) an zumindest eine elektromotorisch angetriebene Radeinheit (16, 18, 20), insbesondere ein Smartwheel, elektronisch übermittelt werden, **dadurch gekennzeichnet, dass** die zumindest eine Radeinheit (16, 18, 20) zumindest eine Kommunikationseinheit (38) umfasst, die dazu vorgesehen ist, mit einer externen Servereinheit (40) und/oder einem externen Nutzerendgerät (42) zu kommunizieren, wobei Daten an die Radeinheit (16) übermittelt werden und an die externe Servereinheit (40) geschickt werden, wobei ein Gepäckfach (30) von einem Schließmittel elektrisch durch ein Signal der Radeinheit (16) verriegelt wird.

7. Verfahren nach Anspruch 6, **dadurch gekennzeichnet, dass** zumindest ein Gepäckstück (12) in einem Gepäckfach (30) verstaut wird, wobei dem Gepäckstück (12) zugeordnete Personendaten an die Radeinheit (16, 18, 20) übermittelt werden.

8. Verfahren nach Anspruch 6 oder 7, **dadurch gekennzeichnet, dass** die Transporteinheit (10) von der zumindest eine Radeinheit (16, 18, 20) zumindest teilautomatisch in zumindest einem Sicherheitsbereich bewegt wird.

## Claims

1. Interchange hub transport device, in particular airport transport device, having a transport unit (10) which is provided for transporting at least one person and/or at least one piece of luggage (12, 14) within at least one interchange hub area, **wherein** at least one wheel unit (16, 18, 20), in particular a smart wheel, which is driven by electric motor and is provided for driving the transport unit (10), wherein the at least one wheel unit (16, 18, 20) comprises at least one wheel base body (22) which can rotate about a rotational axis, at least one drive unit (24) which is arranged at least partially within the wheel base body (22), and at least one energy storage unit (26) which is arranged on the wheel base body (22), wherein the energy storage unit (26) is provided for supplying energy to the drive unit (24), **wherein** the at least one transport unit (10) comprises at least one user interface (28) which is provided for the at least one wheel unit (16, 18, 20) to be controlled by a user, **characterized in that** the at least one wheel unit (16, 18, 20) comprises at least one communication unit (38) which is provided to communicate with an external server unit (40) and/or an external user terminal (42), wherein data can be transmitted to the wheel unit (16) and sent to the external server unit (40), wherein a luggage compartment (30) for the pieces of luggage (12, 14) can be locked electrically by a locking means, by means of a signal of the wheel unit (16).

2. Interchange hub transport device according to Claim 1,
**characterized in that** the at least one transport unit (10) comprises at least one luggage compartment (30) and at least one luggage compartment sensor (32), wherein the at least one luggage compartment sensor (32) is provided to transmit a closed state of the at least one luggage compartment (30) to the at least one wheel unit (16, 18, 20) .

3. Interchange hub transport device according to one of the preceding claims, **characterized in that** the at least one transport unit (10) comprises at least one luggage compartment (30) and at least one luggage compartment sensor (34), wherein the at least one luggage compartment sensor (34) is provided to transmit a number and/or a weight of loaded pieces of luggage (12, 14) to the at least one wheel unit (16, 18, 20).

4. Interchange hub transport device according to one of the preceding claims, **characterized in that** the at least one transport unit (10) comprises a person counting sensor (36) which is provided to transmit a number of transported persons to the at least one wheel unit (16, 18, 20).

5. Interchange hub transport device according to one of the preceding claims, **characterized in that** the at least one wheel unit (16, 18, 20) is provided to move the transport unit (10) at least partially automatically into at least one safety area.

6. Method for transporting persons and/or pieces of luggage (12, 14) by means of a transport unit (10) in an interchange hub area, in particular in an airport, **wherein** personal data and/or luggage data of the persons and/or pieces of luggage (12, 14) to be transported with the transport unit (10) are transmitted electronically to at least one wheel unit (16, 18, 20), in particular a smart wheel, which is driven by electric motor, **characterized in that** the at least one wheel unit (16, 18, 20) comprises at least one communication unit (38) which is provided to communicate with an external server unit (40) and/or an external user terminal (42), wherein data are transmitted to the wheel unit (16) and sent to the external server unit (40), wherein a luggage compartment (30) is locked electrically by a locking means, by means of a signal of the wheel unit (16).

7. Method according to Claim 6, **characterized in that** at least one piece of luggage (12) is stowed in a luggage compartment (30), wherein personal data which are assigned to the piece of luggage (12) are transmitted to the wheel unit (16, 18, 20).

8. Method according to Claim 6 or 7, **characterized in that** the transport unit (10) is moved at least partially automatically by the at least one wheel unit (16, 18, 20) into at least one safety area.

## Revendications

1. Dispositif de transport d'interface de circulation, notamment dispositif de transport aéroportuaire, avec une unité de transport (10) prévue pour le transport d'au moins une personne et/ou d'au moins un bagage (12, 14) à l'intérieur d'au moins une zone d'interface de circulation, au moins une unité de roue entraînée de façon électromotorisée (16, 18, 20), notamment une roue intelligente de type Smartwheel, étant prévue pour l'entraînement de l'unité de transport (10), l'au moins une unité de roue (16, 18, 20) comprenant au moins un corps de base de roue (22) pouvant tourner autour d'un axe de rotation, au moins une unité d'entraînement (24) disposée au moins en partie à l'intérieur du corps de base de roue (22) et au moins une unité d'accumulateur d'énergie (26) disposée au niveau du corps de base de roue (22), l'unité d'accumulateur d'énergie (26) étant prévue pour alimenter en énergie l'unité d'entraînement (24), l'au moins une unité de transport (10) comprenant au moins une interface utilisateur (28) prévue pour commander l'au moins une unité de roue (16, 18, 20) par le biais d'un utilisateur, **caractérisé en ce que** l'au moins une unité de roue (16, 18, 20) comprend au moins une unité de communication (38) qui est prévue pour communiquer avec une unité de serveur externe (40) et/ou un appareil terminal d'utilisateur externe (42), des données pouvant être transmises à l'unité de roue (16) et pouvant être envoyées à l'unité de serveur externe (40), un compartiment à bagages (30) pour les bagages (12, 14) pouvant être verrouillé électriquement par un moyen de fermeture par le biais d'un signal de l'unité de roue (16).

2. Dispositif de transport d'interface de circulation selon la revendication 1, **caractérisé en ce que** l'au moins une unité de transport (10) comprend au moins un compartiment à bagages (30) et au moins un capteur de compartiment à bagages (32), l'au moins un capteur de compartiment à bagages (32) étant prévu pour transmettre un état fermé de l'au moins un compartiment à bagages (30) à l'au moins une unité de roue (16, 18, 20) .

3. Dispositif de transport d'interface de circulation selon l'une quelconque des revendications précédentes, **caractérisé en ce que** l'au moins une unité de transport (10) comprend au moins un compartiment à bagages (30) et au moins un capteur de compartiment à bagages (34), l'au moins un capteur de compartiment à bagages (34) étant prévu pour transmettre un nombre et/ou un poids de bagages (12, 14) chargés à l'au moins une unité de roue (16, 18, 20).

4. Dispositif de transport d'interface de circulation selon l'une quelconque des revendications précédentes, **caractérisé en ce que** l'au moins une unité de transport (10) comprend un capteur de nombre de personnes (36) qui est prévu pour transmettre un nombre de personnes transportées à l'au moins une unité de roue (16, 18, 20) .

5. Dispositif de transport d'interface de circulation selon l'une quelconque des revendications précédentes, **caractérisé en ce que** l'au moins une unité de roue (16, 18, 20) est prévue pour déplacer au moins en partie automatiquement l'unité de transport (10) dans au moins une zone de sécurité.

6. Procédé de transport de personnes et/ou de bagages (12, 14) au moyen d'une unité de transport (10) dans une zone d'interface de circulation, notamment dans un aéroport, les données de personnes et/ou les données de bagages des personnes et/ou bagages (12, 14) à transporter avec l'unité de transport (10) étant transmises électroniquement à au moins une unité de roue entraînée de façon électromotorisée (16, 18, 20), notamment à une roue intelligente de type Smartwheel, **caractérisé en ce que** l'au moins une unité de roue (16, 18, 20) comprend au moins une unité de communication (38) qui est prévue pour communiquer avec une unité de serveur externe (40) et/ou avec un appareil terminal d'utilisateur externe (42), les données étant transmises à l'unité de roue (16) et étant envoyées à l'unité de serveur externe (40), un compartiment à bagages (30) étant verrouillé électriquement par un moyen de fermeture par le biais d'un signal de l'unité de roue (16).

7. Procédé selon la revendication 6, **caractérisé en ce qu'**au moins un bagage (12) est logé dans un compartiment à bagages (30), des données de personne associées au bagage (12) étant transmises à l'unité de roue (16, 18, 20).

8. Procédé selon la revendication 6 ou 7, **caractérisé en ce que** l'unité de transport (10) est déplacée au moins en partie automatiquement dans au moins une zone de sécurité par l'au moins une unité de roue (16, 18, 20) .
